# EUROPÄISCHE PATENTSCHRIFT

(11) **EP 2 248 951 B1**
(45) Veröffentlichungstag und Bekanntmachung des Hinweises auf die Patenterteilung: **15.01.2014**
(21) Anmeldenummer: 09006277.9
(22) Anmeldetag: 08.05.2009
(51) Int. Cl.: E02D 5/76, E02D 33/00, E02D 5/80, E21D 21/02, G01L 5/00

(54) **Verfahren und Vorrichtung zur Ermittlung des axialen Kraftverlaufes in einem Verpressanker**
Method and device for determining the axial force progression in a pressure-grouted anchor
Procédé et dispositif de détermination de l'évolution de la force axiale dans un ancrage injecté sous pression

(43) Veröffentlichungstag der Anmeldung: 10.11.2010
(73) Patentinhaber: Lechner, Peter, 8010 Graz (AT)
(72) Erfinder: Lechner, Peter, Dipl-Ing., 8010 Graz (AT); Kulmer, Reinhard, Ing., 8212 Pischelsdorf (AT)
(74) Vertreter: Neumann, Ernst Dieter

(56) Entgegenhaltungen:
- EP-A- 0 867 687
- EP-A- 1 980 712
- WO-A-98/19044
- WO-A-03/069122
- DE-A1- 2 523 988
- JP-A- 2002 081 061
- JP-A- 2002 221 457
- JP-A- 2003 279 424

## Beschreibung

Die Erfindung betrifft ein Verfahren zur Ermittlung des axialen Kraftverlaufes der in ein Bohrloch eingeleiteten Verankerungskraft an einem vorgespannten Verpreßanker, der einen zylindrischen Verpreßkörper und zumindest ein Stahlzugglied sowie einen Ankerkopf umfaßt. Die Erfindung betrifft weiterhin eine Vorrichtung zur Ermittlung dieses axialen Kraftverlaufes zum koaxialen Einbau in den Verpreßkörper eines Verpreßankers sowie mit derartigen Vorrichtungen bestückte Verpreßanker.

Verpreßanker werden überall dort eingesetzt, wo durch Verankerungen im Boden oder im Fels Auflasten auf bestimmte Bauwerke ausgeübt werden sollen. Die Verpreßanker können hierbei sowohl auf Stützbauwerke einwirken als auch zur Auftriebssicherung von Bauwerken oder zur Simulation von Probebelastungen an Fundamenten oder Bodenplatten dienen.

Verpreßanker bestehen aus einem in ein Bohrloch eingebrachten Verpreßkörper, darin eingebundenen Stahlzuggliedern in Form von Ankerstäben, Ankerdrähten oder Ankerlitzen sowie einem Ankerkopf, der sich am zu stützenden oder zu belastenden Bauwerk abstützt und über das Stahlzugglied oder die Stahlzugglieder gegen den Verpreßkörper verspannt wird.

Die vorgenannten Verpreßanker können als Temporäranker mit einer Einsatzdauer von bis zu zwei Jahren oder als Daueranker mit einer Einsatzzeit von bis zu hundert Jahren verwendet werden. Beides bedingt zum einen den Einsatz von geeigneten Korrosionsschutzmitteln, auf die hier nicht näher eingegangen wird, sowie zum anderen die Möglichkeit, die anliegende Vorspannkraft langfristig zu überwachen.

Bisher ist es üblich, die Vorspannkraft am Ankerkopf zu messen oder die in den Stahlzuggliedern anliegende Ankerkraft zu erfassen. Dies erfolgt z.B. mit Kraftmeßdosen unter dem Ankerkopf oder innerhalb der Ankerkopfkonstruktion oder mittels Dehnmeßstreifen an den Stahlzuggliedern. Hiermit wird erkennbar die Gesamtkraft ermittelt, die in das zu stützende oder zu belastende Bauwerk eingeleitet wird.

Aus der JP 2002081061 ist ein gattungsgemäßes Verfahren zur Ermittlung von Dehnungen eines Ankers bekannt, die durch auftretende Zugkräfte entstehen können. Dabei erfolgt die Messung der örtlichen Axialdehnung an einem Außenumfang des Stahlzugglieds. Hierfür werden optische Sensoren verwendet, die auf eine Beschichtung des Stahlzuggliedes aufgeklebt werden.

Aus der JP 2003279424 ist eine gattungsgemäße Vorrichtung bekannt, die außerhalb des Bohrlochs am Ankerkopf angebracht wird. Die Vorrichtung hat zwei Scheiben aus Metall, zweischen denen ein oder mehrere Gummischeiben angeordnet sind. An der Außenumfangsfläche der Vorrichtung sind optische fasern in Windungen angeordnet.

Der vorliegenden Erfindung liegt die Aufgabe zugrunde, den Ankerkraftverlauf im Boden zu ermitteln, d.h. die axiale Verteilung der Krafteinleitung vom Verpreßkörper auf die Bohrlochwandung. Hiermit können gegebenenfalls Ankerlängen optimiert werden und auf Tiefenbereich mit günstiger Krafteinleitung konzentriert werden. Daneben sind bestimmte Setzungserscheinungen und Vorspannungsverluste während der Einsatzdauer besser interpretierbar.

Die Lösung hierfür besteht in einem Verfahren zur Ermittlung des axialen Kraftverlaufes der in ein Bohrloch eingeleiteten Verankerungskraft an einem vorgespannten Verpreßanker, der einen zylindrischen Verpreßkörper und zumindest ein Stahlgugglied sowie einen Ankerkopf umfaßt, wobei an einer Mehrzahl von Längsbereichen des Verpreßankers die örtliche Verankerungskraft ermittelt wird, indem die örtliche Axialdehnung im Material des Verpreßkörpers gemessen wird. Die Axialdehnung liegt hierbei mit negativen Werten als Stauchungen vor. Mit dem hiermit vorgegebenen Verfahren kann der Kraftverlauf über die ganze Länge des Verpreßkörpers, und zwar sowohl im Bereich der Haftstrecke, auf der der Ankerstahl in den Verpreßkörper eingebunden ist, als auch im Bereich der Freispielstrecke, auf der der Ankerstahl gegenüber dem Verpreßkörper längendehnbar freigestellt ist, durch Integrationsverfahren rechnerisch ermittelt werden. In Abhängigkeit der Meßergebnisse, welche von Bodenmaterial zu Bodenmaterial verschieden sind, besteht die Möglichkeit der Optimierung der Ankerlängen wie auch der Tiefenlage und der Länge der Haftstrecken. Dies ist insbesondere von Bedeutung, wenn es zur Ausführung von Verpreßankern mit mehreren Stahlzuggliedern gestaffelter Länge und damit zu Mehrfachhaftstrecken in einer Ankerbohrung kommt, da hierbei einer möglichst gedrängt gestaffelten Anordnung der einzelnen Haftstrecken große Bedeutung zukommt. Verpreßanker dieser Art werden als SBMA-System bezeichnet (single bore multiple anchor system). In bevorzugter Ausgestaltung ist daher vorgesehen, daß zur Ermittlung des axialen Kraftverlaufes der in ein Bohrloch eingeleiteten Verankerungskraft an einem vorgespannten Verpreßanker, der mehrere Stahlzugglieder von gestaffelter Länge umfaßt, die örtliche Axialdehnung im Material des Verpreßkörpers zumindest in jedem Staffelungsabschnitt der Stahlzugglieder gemessen wird. Die verschiedenen Stahlzugglieder enden hierbei alle im Ankerkopf, haben jedoch unterschiedliche, schrittweise gestaffelte Länge, so daß die Anzahl der parallel verlaufenden Zugglieder in diesen Staffelungsabschnitten schrittweise abnimmt. Für jedes Stahlzugglied geht dabei die Haftstrecke vom freien Ende aus über eine bestimmte Länge, wobei die Haftstrecken der jeweils hinzutretenden Stahlzugglieder an die der jeweils längeren Stahlzugglieder anschließen sollen. Die Längedehnung im Verpreßkörper soll dabei in jedem der Staffelungsabschnitte, die sich voneinander durch die unterschiedliche Anzahl der zueinander parallel verlaufenden Stahlzugglieder unterscheiden, zumindest an einer Stelle gemessen werden. In einem entsprechenden Verpreßanker ist somit in jedem Staffelungsabschnitt zumindest jeweils eine der erfindungsgemäßen Vorrichtungen im Verpreßkörper einzubauen.

Ein besonderer Vorteil des erfindungsgemäßen Verfahrens liegt darin, daß die Krafteinleitung nicht nur im Bereich der Haftstrecke, in der die Stahlzugglieder fest in den Verpreßkörper eingebunden sind, sondern auch in dem Bereich der Freispielstrecke ermittelt werden kann, die ebenfalls einen Beitrag zur Krafteinleitung liefert, obwohl die Stahlzugglieder in diesem Bereich längendehnbar in Verpreßkörper geführt sind.

Die genannten Axialdehnung innerhalb des Verpreßkörpers wird vorzugsweise mittels mehrerer umfangsverteilt im Verpreßkörper eingebauter Dehnmeßstreifen ermittelt, die jeweils die Längsdehnung und die Querdehnung erfassen.

Eine erfindungsgemäße Vorrichtung zur Ermittlung des axialen Kraftverlaufes der in ein Bohrloch eingeleiteten Verankerungskraft an einem vorgespannten Verpreßanker zum koaxialen Einbau in den Verpreßkörper des Verpreßankers umfaßt zwei mit axialem Abstand zueinander koaxial angeordnete Druckringe und ein diese verbindendes Verformungsrohr, das mit mehreren umfangsverteilten Dehnmeßstreifen bestückt ist und innen und außen mit einer elasto-plastischen Beschichtung versehen ist.

Mit der hier gegebenen konstruktiven Lösung wird eine Vorrichtung bereitgestellt, die einfach aufgebaut ist und die die örtliche Axialdehnung im Bereich des Verpreßkörpers anhand der Verformung d.h. Stauchung des Verformungsrohres zuverlässig ermittelt. Durch Einbau einer hinreichenden Anzahl von diesen Vorrichtungen über die Länge des Verpreßkörpers gestaffelt kann somit der gewünschte Verlauf der Krafteinleitung rechnerisch ermittelt werden.

Die Dehnmeßstreifen werden vorzugsweise umfangsverteilt jeweils um 90° zueinander versetzt auf das vorzugsweise aus Aluminium bestehende Verformungsrohr innen aufgebracht, wobei diese Dehnmeßstreifen jeweils paarweise benachbart über eine elektrischen Vollbrücke miteinander verschaltet sind. Die Vorrichtungen sind vor dem Einbau zu eichen. Die Leitungsführung innerhalb des Verpreßkörpers und aus dem Bohrloch heraus ist dauerhaft zu sichern. Das Verformungsrohr ist kraftschlüssig mit den beiden Druckringen, die als Stahlringe auszuführen sind, zu verbinden, wobei Ringnuten in die Druckringe eingearbeitet sein können, in die das Verformungsrohr eingepreßt ist. Das Verformungsrohr ist beidseitig mit einer elasto-plastischen Masse beschichtet, so daß keine Einbindung in den Verpreßkörper im Bereich des Verformungsrohres erfolgen kann. Die von den Dehnmeßstreifen erfaßten Verformungswerte werden im Einsatz über der Höhe des Verformungsrohres integriert. Die Meßleitungen werden ebenso wie die Stahlzugglieder im Bereich der Freispielstrecken in einem Schutzrohr geführt, so daß sie auch bei Verformungen des Verpreßkörpers oder Rissen im Verpreßkörper von Beschädigungen freigehalten werden.

Bezüglich weiterer Einzelheiten wird auf den Inhalt der Patentansprüche und der nachfolgenden Zeichnungsbeschreibung Bezug genommen.

Ein bevorzugtes Ausführungsbeispiel eines erfindungsgemäßen Verpreßankers sowie einer erfindungsgemäßen Vorrichtung ist in den Zeichnungen dargestellt und wird nachstehend beschrieben.
- Figur 1: zeigt einen erfindungsgemäßen Verpreßanker im Längsschnitt;
- Figur 2: zeigt einen Längsabschnitt des Verpreßankers nach Figur 1 in vergrößerter Darstellung;
- Figur 3: zeigt eine erfindungsgemäße Vorrichtung als vergrößerte Einzelheit im Längsschnitt;
- Figur 4: zeigt die Vorrichtung nach Figur 2 im Querschnitt im eingebauten Zustand.

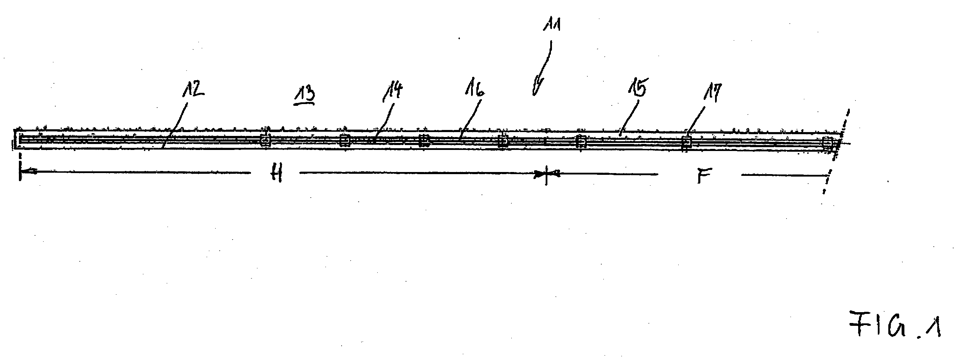

In Figur 1 ist ein Verpreßanker 11 im Längsschnitt dargestellt, der in einem Bohrloch 12 größerer Länge im Boden 13 liegt. In das Bohrloch 12 ist ein Hüllrohr 14, insbesondere in Form eines Kunststoffripprohres eingeschoben, wobei seine zentrale koaxiale Ausrichtung zum Bohrloch 12 durch hier nicht erkennbare Abstandshalter bzw. Zentrierelemente sichergestellt ist. Ein Ringraum 15 zwischen Bohrlochwandung und Hüllrohr ist mit Zementmörtel/Zementstein oder dergleichen über die gesamte Bohrlochlänge verfüllt und bildet einen Verpreßkörper. Das Innere des Hüllrohres 14 ist über die Krafteinleitungslänge oder Haftstrecke H mit Verpreßmörtel gefüllt, wobei in das Verpreßmaterial ein Zugglied 16 eingebunden ist. Das Zugglied 16 setzt sich im Hüllrohr 14 über die sich daran anschließende freie Ankerlänge oder Freistrecke F fort, ohne an den Ringraum 15 angebunden zu sein. Dies kann wie hier dargestellt durch ein Offenbleiben des Hüllrohres 14 oder durch ein Ummanteln des Zuggliedes mit einem Schutzrohr erfolgen, in welchem das Zugglied 16 in Längsrichtung dehnbar geführt ist. Die Mittel zum Vorspannen des Zuggliedes 16, der sogenannte Ankerkopf, der sich auf einer an der Bodenoberfläche zu sichernden Wand oder dergleichen außen abstützt, sind hier nicht dargestellt. Im Ringraum 15 ist eine Mehrzahl von Druckmeßvorrichtungen 17 erkennbar, die koaxial zum Hüllrohr 14 über der Länge verteilt im Verpreßkörper angeordnet sind, nämlich vier Meßvorrichtungen im Bereich der Haftstrecke H und drei Druckmeßvorrichtungen im Bereich der Freistrecke F.

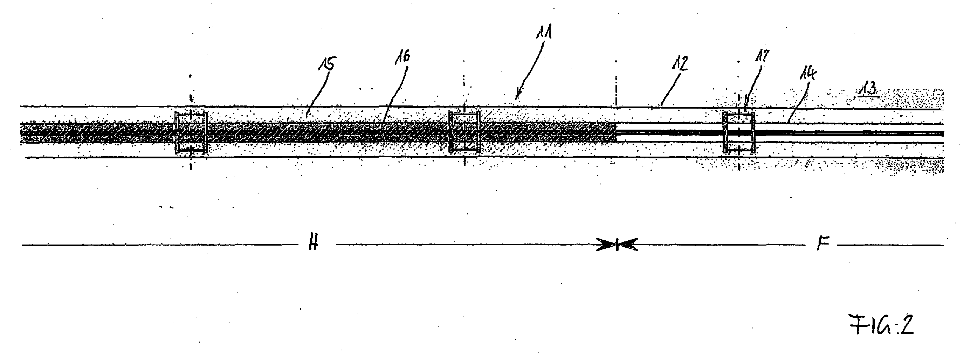

In Figur 2 sind gleiche Einzelheiten wie in Figur 1 mit gleichen Bezugsziffern belegt. Es ist ein Zwischenabschnitt des Verpreßankers 11 erkennbar, der zum Teil die Haftstrecke H und zum Teil die Freistrecke F bildet. Es ist das sich über die gesamte Länge des Bohrloches 12 erstreckende Hüllrohr 14 zu erkennen, das mit dem Bohrloch 12 den Ringraum 15 bildet, der über der gesamten Länge mit Zementmörtel oder Zementstein verfüllt ist und den Verpreßkörper des Verpreßankers 11 bildet. Innerhalb der Haftstrecke H ist das Hüllrohr 14 mit Verpreßmörtel verfüllt, in dem das Zugglied 16 eingebunden ist. Im Bereich der Freistrecke F liegt das Zugglied 16 im freibleibenden Hüllrohr 14, wobei auch dieser Bereich mit Verpreßmörtel verfüllt sein kann, wenn das Zugglied 16 durch ein Schutzrohr gegen ein Einbinden im Verpreßmaterial geschützt ist. Es sind drei der Druckmeßvorrichtungen 17 im Längsschnitt dargestellt, von denen zwei im Bereich der Haftstrecke H und eine im Bereich der Freistrecke F liegen. Die Bohrlochwandung im Boden 13 ist idealisiert rein zylindrisch dargestellt. Nach Einbringen von Zementmörtel in den Ringraum 15 und insbesondere nach Verpressen des Verpreßmörtels in das Hüllrohr 14 kann sich die Form des Bohrloches 12 verändern.

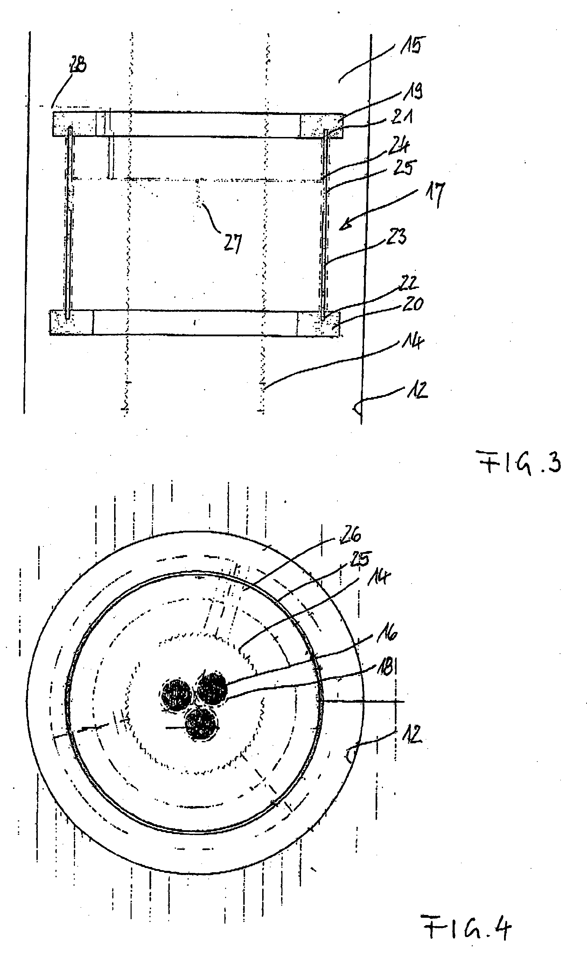

Die Figuren 3 und 4 werden nachstehend gemeinsam beschrieben. Es ist eine der Druckmeßvorrichtungen 17 erkennbar, die im Bereich der Freistrecke F des Verpreßankers 11 eingebaut ist. Die ringförmige Vorrichtung 17 liegt dabei im verfüllten Ringraum 15 zwischen Hüllrohr 14 und Bohrlochwandung 12. Innerhalb des Hüllrohres 14 liegen drei Zugglieder 16, die im Bereich der Freistrecke F mit Schutzrohren 18 versehen sind, in denen sich die Zugglieder 16 längs dehnen können und in die kein Zementmörtel eindringen kann. Im vorliegenden Fall ist das Hüllrohr 14 im Bereich der Freistrecke F innen nicht mit Verpreßmörtel verfüllt. Die Vorrichtung 17 besteht aus zwei kozentrisch auf dem Hüllrohr 14 gehaltenen Druckringen 19, 20, in deren sich einander gegenüberliegenden Endflächen jeweils Ringnuten 21, 22 eingearbeitet sind. In diese Ringnuten 21, 22 ist ein Verformungsrohr 23 eingesetzt, das innen und außen eine Beschichtung 24, 25 aus elasto-plastischer Masse hat, während die Druckringe 19, 20 unbeschichtet sind. Auf diese Weise sind die Druckringe 19, 20 formschlüssig im Zementmörtel/Zementstein eingebunden, während das Verformungsrohr 23 im Material des Verpreßkörpers verformbar einliegt. An zumindest einem der Druckringe sind drei umfangsverteilte Abstandshalter 26 befestigt, mit denen die Vorrichtung 17 gegenüber dem Hüllrohr 14 zentriert gehalten wird. Das Hüllrohr 14 verfügt seinerseits über hier nicht dargestellte Abstandshalter, mit dem sich das Hüllrohr 14 im Bohrloch 12 zentriert. Auf der Innenseite des Verformungsrohres 23 sind unmittelbar auf dessen metallischer Oberfläche vier gleichmäßig über dem Umfang verteilte Dehnmeßstreifen 27 aufgebracht, die paarweise benachbart über eine elektrische Vollbrücke miteinander verschaltet sind. Die Anschlußleitungen 28 sind geschützt aus dem Bohrloch 12 herauszuführen.

### Bezugszeichenliste

- 11: Verpreßanker
- 12: Bohrloch
- 13: Boden
- 14: Hüllrohr
- 15: Ringraum
- 16: Zugglied
- 17: Meßvorrichtung
- 18: Schutzhülse
- 19: Druckring
- 20: Druckring
- 21: Ringnut
- 22: Ringnut
- 23: Verformungsrohr
- 24: Beschichtung
- 25: Beschichtung
- 26: Abstandshalter
- 27: Dehnmeßstreifen
- 28: Leitung

## Patentansprüche

1. Verfahren zur Ermittlung des axialen Kraftverlaufes der in ein Bohrloch (12) eingeleiteten Verankerungskraft an einem vorgespannten Verpreßanker (11), der einen zylindrischen Verpreßkörper und zumindest ein Stahlzugglied sowie einen Ankerkopf umfaßt, wobei an einer Mehrzahl von Längsbereichen des Verpreßankers (11) die örtliche Verankerungskraft ermittelt wird,
**dadurch gekennzeichnet,**
**daß** die örtliche Verankerungskraft ermittelt wird, indem die örtliche Axialdehnung im Material des Verpreßkörpers gemessen wird.

2. Verfahren nach Anspruch 1,
**dadurch gekennzeichnet,**
**daß** die örtliche Axialdehnung im Material des Verpreßkörpers jeweils mittels mehrerer umfangsverteilt eingebauter Dehnmeßstreifen gemessen wird.

3. Verfahren nach einem der Ansprüche 1 oder 2 zur Ermittlung des axialen Kraftverlaufes der in ein Bohrloch (12) eingeleiteten Verankerungskraft an einem vorgespannten Verpreßanker (11), der mehrere Stahlzugglieder von gestaffelter Länge umfaßt,
**dadurch gekennzeichnet,**
**daß** die örtliche Axialdehnung im Material des Verpreßkörpers zumindest in jedem Staffelungsabschnitt der Stahlzugglieder gemessen wird.

4. Vorrichtung zur Ermittlung des axialen Kraftverlaufes der in ein Bohrloch (12) eingeleiteten Verankerungskraft an einem vorgespannten Verpreßanker (11),
umfassend zwei mit axialem Abstand zueinander koaxial angeordnete Druckringe (19, 20) und ein diese verbindendes Veformungsrohr (23), das innen und außen mit einer elasto-plastischen Beschichtung (24, 25) versehen ist,
**dadurch gekennzeichnet, daß** die Vorrichtung zum koaxialen Einbau in den Verpreßkörper, geeignet ist, und daß das Verformungsrohr (23) mit mehreren umfangsverteilten Dehnmeßstreifen (27) bestückt ist.

5. Vorrichtung nach Anspruch 4,
**dadurch gekennzeichnet,**
**daß** vier Dehnmeßstreifen (27) umfangsverteilt im Inneren der Verformungshülse (23) angeordnet sind, die jeweils um 90° auf dem Umfang zueinander versetzt sind und jeweils paarweise benachbart miteinander elektrisch verschaltet sind.

6. Vorrichtung nach einem der Ansprüche 4 oder 5,
**dadurch gekennzeichnet,**
**daß** an zumindest einem der Druckringe (19, 20) umfangsverteilte nach innen weisende Abstandshalter (26) zur Zentrierung auf einem Hüllrohr (14) angeordnet sind.

7. Vorrichtung nach einem der Ansprüche 4 bis 6,
**dadurch gekennzeichnet,**
**daß** in den Druckringen (19, 20) sich einander gegenüberliegend Ringnuten (21, 22) eingearbeitet sind, in die die Verformungsholse (23) eingesetzt ist.

8. Vorrichtung nach einem der Ansprüche 4 bis 7,
**dadurch gekennzeichnet,**
**daß** die Druckringe (19, 20) aus Stahl gefertigt sind.

9. Vorrichtung nach einem der Ansprüche 4 bis 8,
**dadurch gekennzeichnet,**
**daß** die Verformungshülse (23) aus einem Aluminiumrohr besteht.

10. In einem Bohrloch eingebauter vorgespannter Verpreßanker (11), der einen zylindrischen Verpreßkörper, zumindest ein Stahlzugglied sowie einen Ankerkopf umfaßt, in dessen Verpreßkörper über oder Länge verteilt mehrere Vorrichtungen (17) nach-einem der Ansprüche 4 bis 8 koaxial eingebaut sind.

11. Verpreßanker nach Anspruch 10,
**dadurch gekennzeichnet,**
**daß** zumindest eine Vorrichtung (17) im axialen Bereich der Haftstrecke H und zumindest eine Vorrichtung (17) im axialen Bereich der Freispielstrecke F im Verpreßkörper eingebaut ist.

12. Verpreßanker nach einem der Ansprüche 10 oder 11 mit mehreren Stahlzuggliedern von gestaffelter Länge,
**dadurch gekennzeichnet,**
**daß** zumindest jeweils eine Vorrichtung (17) im axialen Bereich der Haftstrecke H jedes der einzelnen Stahlzugglieder im Verpreßkörper eingebaut ist.

## Claims

1. Method for determining the axial force progression of the anchoring force, introduced into a bore hole (12), on a pre-stressed grouted anchor (11), which comprises a cylindrical grout body and at least one steel tension member as well as an anchoring head, wherein the local anchoring force is determined at a multitude of longitudinal portions of the grouted anchor (11),
**characterised in**
**that** the local anchoring force is determined by measuring the local axial elongation in the material of the grout body.

2. Method according to claim 1,
**characterised in**
**that** the local axial elongation is measured in the material of the grout body respectively by means of several strain gauges, embedded therein in a circumferentially distributed manner.

3. Method according to one of claims 1 or 2 for determining the axial force progression of the anchoring force, introduced into a bore hole (12), on a pre-stressed grouted anchor (11) which comprises several steel tension members of staggered length,
**characterised in**
**that** the local axial elongation in the material of the grout body is measured at least in each staggered portion of the steel tension members.

4. Device for determining the axial force progression of the anchoring force, introduced into a bore hole (12), at a pre-stressed grouted anchor (11),
comprising two thrust rings (19, 20), which are arranged coaxially to each other with an axial distance, and a deformation tube (23) which connects these and which is provided on the inside and the outside with an elastoplastic coating (24, 25),
**characterised in**
**that** the device is suitable for being coaxially mounted in the grout body and that the deformation tube (23) is provided with several circumferentially distributed strain gauges (27).

5. Device according to claim 4,
**characterised in**
**that** four strain gauges (27) are arranged circumferentially distributed on the inside of the deformation sleeve (23), which are respectively off-set to each other by 90° on the circumference and are electrically connected to each other respectively in pairs, neighbouring each other.

6. Device according to one of claims 4 or 5,
**characterised in**
**that** circumferentially distributed and inwardly projecting spacers (26) are arranged on at least one of the thrust rings (19, 20) for centring on an envelop tube (14).

7. Device according to one of claims 4 to 6,
**characterised in**
**that** annular grooves (21, 22) are provided in the thrust rings (19, 20) which are arranged opposite to each other and into which the deformation sleeve (23) is inserted.

8. Device according to one of claims 4 to 7,
**characterised in**
**that** the thrust rings (19, 20) are manufactured from steel.

9. Device according to one of claims 4 to 8,
**characterised in**
**that** the deformation sleeve (23) consists of an aluminium pipe.

10. Pre-stressed grouted anchor (11) mounted in a bore hole and which comprises a cylindrical grout body, at least one steel tension member as well as an anchor head, in which grout body, distributed across the length, several devices (17) according to one of claims 4 to 8 are coaxially incorporated.

11. Grouted anchor according to claim 10,
**characterised in**
**that** at least one device (17) is mounted in the axial portion of the adhesion length H and at least one device (17) is mounted in the axial portion of the clearance length F in the grout body.

12. Grouted anchor according to one of claims 10 or 11 with several steel tension members of staggered length,
**characterised in**
**that** at least respectively one device (17) is mounted in the axial portion of the adhesion length H of each of the individual steel tension members in the grout body.

## Revendications

1. Procédé de détermination du profil axial de la force d'ancrage introduite dans un forage (12) et agissant sur un tirant d'ancrage injecté (11) précontraint, composé d'un corps cylindrique de scellement sous pression et d'au moins un organe de traction en acier, ainsi que d'une tête d'ancrage, la force d'ancrage localisée étant déterminée dans une pluralité de régions longitudinales dudit tirant d'ancrage injecté (11),
**caractérisé par le fait**
**que** la force d'ancrage localisée est déterminée par mesure de l'allongement axial localisé dans le matériau du corps de scellement sous pression.

2. Procédé selon la revendication 1,
**caractérisé par le fait**
**que** l'allongement axial localisé, dans le matériau du corps de scellement sous pression, est respectivement mesuré au moyen de plusieurs jauges de contraintes intégrées avec répartition sur le pourtour.

3. Procédé selon l'une des revendications 1 ou 2, dévolu à la détermination du profil axial de la force d'ancrage introduite dans un forage (12) et agissant sur un tirant d'ancrage injecté (11) précontraint, comprenant plusieurs organes de traction en acier présentant des longueurs échelonnées,
**caractérisé par le fait**
**que** l'allongement axial localisé, dans le matériau du corps de scellement sous pression, est mesuré au moins dans chaque zone d'échelonnement des organes de traction en acier.

4. Dispositif de détermination du profil axial de la force d'ancrage introduite dans un forage (12) et agissant sur un tirant d'ancrage injecté (11) précontraint, comprenant deux bagues de pression (19, 20) agencées coaxialement l'une à l'autre avec espacement axial, et un tube de déformation (23) qui relie ces dernières et est doté d'un revêtement élastoplastique (24, 25), intérieurement et extérieurement,
**caractérisé par le fait**
**que** le dispositif se prête à l'intégration coaxiale dans le corps de scellement sous pression ; et par le fait que le tube de déformation (23) est garni de plusieurs jauges de contraintes (27) réparties sur le pourtour.

5. Dispositif selon la revendication 4,
**caractérisé par le fait**
**que** quatre jauges de contraintes (27), logées dans l'espace interne de la douille de déformation (23) avec répartition sur le pourtour, sont respectivement décalées de 90° les unes des autres sur le pourtour et sont connectées électriquement au voisinage les unes des autres, par paires respectives.

6. Dispositif selon l'une des revendications 4 ou 5,
**caractérisé par le fait**
**que** des éléments d'espacement (26) pointant vers l'intérieur, répartis sur le pourtour, sont implantés sur au moins l'une des bagues de pression (19, 20) en vue du centrage sur un tube d'enveloppement (14).

7. Dispositif selon l'une des revendications 4 à 6,
**caractérisé par le fait**
**que** des rainures annulaires (21, 22), dans lesquelles la douille de déformation (23) est insérée, sont pratiquées en vis-à-vis dans les bagues de pression (19, 20).

8. Dispositif selon l'une des revendications 4 à 7,
**caractérisé par le fait**
**que** les bagues de pression (19, 20) sont fabriquées en acier.

9. Dispositif selon l'une des revendications 4 à 8,
**caractérisé par le fait**
**que** la douille de déformation (23) est constituée d'une tubulure d'aluminium.

10. Tirant d'ancrage injecté (11) précontraint, intégré dans un forage et composé d'un corps cylindrique de scellement sous pression, d'au moins un organe de traction en acier, ainsi que d'une tête d'ancrage, et dans le corps de scellement sous pression duquel plusieurs dispositifs (17), conformes à l'une des revendications 4 à 8, sont intégrés coaxialement avec répartition sur la longueur.

11. Tirant d'ancrage injecté selon la revendication 10,
**caractérisé par le fait**
**que**, dans le corps de scellement sous pression, au moins un dispositif (17) est intégré dans la région axiale du trajet d'adhérence H et au moins un dispositif (17) est intégré dans la région axiale du trajet F à liberté de jeu.

12. Tirant d'ancrage injecté selon l'une des revendications 10 ou 11, comprenant plusieurs organes de traction en acier présentant des longueurs échelonnées,
**caractérisé par le fait**
**qu'**au moins un dispositif (17) est respectivement intégré, dans le corps de scellement sous pression, dans la région axiale du trajet d'adhérence H de chacun des organes individuels de traction en acier.
